# EUROPÄISCHE PATENTSCHRIFT

(11) **EP 1 102 815 B1**
(45) Veröffentlichungstag und Bekanntmachung des Hinweises auf die Patenterteilung: **27.11.2002**
(21) Anmeldenummer: 99934630.7
(22) Anmeldetag: 08.07.1999
(51) Int. Cl.: C08L 83/04, C08K 3/00

(54) **SCHNELLHÄRTENDE SILIKONMASSEN MIT GUTEN HAFTEIGENSCHAFTEN**
QUICK HARDENING SILICON MATERIALS WITH GOOD ADHESIVE PROPERTIES
MASSES DE SILICONE A DURCISSEMENT RAPIDE, PRESENTANT UNE BONNE ADHERENCE

(30) Priorität: 21.07.1998 DE 19832688
(43) Veröffentlichungstag der Anmeldung: 30.05.2001
(73) Patentinhaber: Heidelberger Bauchemie GmbH, 69120 Heidelberg (DE)
(72) Erfinder: LUFT, Werner, D-83512 Reitmehring (DE); FUTSCHER, Michael, D-83339 Chieming (DE); PAHL, Hermann, D-83371 Stein an der Traun (DE)
(74) Vertreter: Patentanwälte Zellentin & Partner
(86) Internationale Anmeldenummer: EP9904801
(87) Internationale Veröffentlichungsnummer: WO00005309

(56) Entgegenhaltungen:
- EP-A- 0 548 847
- EP-A- 0 644 231
- US-A- 4 075 154
- US-A- 4 508 888
- PATENT ABSTRACTS OF JAPAN vol. 016, no. 310 (C-0960), 8. Juli 1992 (1992-07-08) & JP 04 088059 A (TORAY DOW CORNING SILICONE CO LTD), 19. März 1992 (1992-03-19)

## Beschreibung

Die vorliegende Erfindung betrifft einen Bausatz zur Herstellung von Mischungen aus zumindest bifunktionell terminierten Diorganopolysiloxanen, Aminosilan-Vernetzungsmitteln, sowie ggf. Füllstoffen, geeigneten Additiven, Pigmenten, Farbstoffen, Oxidations-, Hitze- und Lichtschutzpigmenten sowie Lösungsmittel und Weichmacher.

Solche auch als kaltvulkanisierende, einkomponentige Silikonkautschuke bekannten Organopolysiloxan-Mischungen vernetzen üblicherweise bei Raumtemperatur unter Aufnahme von Wasser aus der umgebenden Atmosphäre zu kautschukelastischen Polymeren. Als Kettenverlängerer und Vernetzer werden zwei- und bevorzugt höherfunktionelle Aminosilanverbindungen eingesetzt, welche durch Reaktion mit dem Polysiloxan bzw. durch Hydrolyse Amine abspalten und so die Ausbildung eines makromolekularen Netzwerkes einleiten. Nach erfolgter Aushärtung zeichnen sich solche Massen durch eine gute Eigenhaftung auf den unterschiedlichsten Werkstoffoberflächen und durch eine allgemein hohe Beständigkeit gegenüber Temperatur-, Licht-, Feuchtigkeits- sowie Chemikalieneinwirkung aus.

Die Aushärtung solcher einkomponentigen, bei Raumtemperatur unter Feuchtigkeitsaufnahme vernetzenden Polysiloxan-Mischungen verläuft verhältnismäßig langsam, da das für die Reaktion erforderliche Wasser aus der umgebenden Atmosphäre in das Innere der Masse diffundieren muß. Die Geschwindigkeit der Durchhärtung nimmt daher mit fortschreitender Reaktion im Inneren der Masse ab. Bei geringer Luftfeuchtigkeit oder bei einem ungünstigen Verhältnis von Oberfläche zu Volumen der Silikonmasse kann die Reaktion sehr langsam werden oder wie in dampfdicht abgeschlossenen Räumen auch vollständig zum Erliegen kommen.

Die an sich vielfältigen Einsatzmöglichkeiten solcher luftfeuchtigkeitshärtenden Silikone als Dicht- oder Klebstoff sind insbesondere bei Verwendung in der industriellen Fertigung wegen der langsamen Aushärtung eingeschränkt. Zwar sind zweikomponentige, bei Raumtemperatur oder auch erst bei höherer Temperatur schnell härtende Silikonkautschuksysteme bekannt, doch scheitert deren Einsatz häufig an der mangelnden Eigenhaftung oder auch der vergleichsweise geringen Temperaturbeständigkeit dieser Produkte. Setzt man aber die unter dem Einfluß von Luftfeuchtigkeit nur langsam aushärtenden Silikone ein, werden bei den aus wirtschaftlichen Gründen erwünschten kurzen Taktzeiten große Zwischenlager für abgedichtete oder verklebte Teile notwendig, um die Aushärtung sicherzustellen. Gegebenenfalls müssen diese Zwischenlager zusätzlich klimatisiert oder befeuchtet werden. Unter Umständen werden auf diese Weise bereits sehr große Stückzahlen gefertigt, bevor erstmals eine Prüfung auf Fehlerfreiheit und Funktion der erzeugten Güter möglich ist. Großflächige Verklebungen zwischen diffusionsdichten Flächen sind in der Praxis mit luftfeuchtigkeitshärtenden Silikonen ebensowenig durchführbar wie die Herstellung von Formkörpem in abgeschlossenen Formen.

Setzt man den bekannten aminosilanhaltigen und luftfeuchtigkeitshärtenden Massen Wasser in flüssiger Form zu, wird im Vergleich zur Vernetzung mit Luftfeuchtigkeit eine gewisse Beschleunigung der Aushärtung erzielt. Allerdings führt diese Form der Vernetzung nicht zu Endprodukten mit Materialeigenschaften, wie sie bei reiner Luftfeuchtigkeitsvemetzung erhalten werden. Vielmehr resultieren Massen, welche auf Dauer wesentlich weicher bleiben, schlechte Eigenhaftung aufweisen und noch sehr lange Zeit mit dem als Vernetzungsspaltprodukt entstehenden Amin angequollen sind. Dementsprechend lange bleibt auch der gewöhnlich als äußerst unangenehm empfundene Amingeruch erhalten.

Aus der DE 4431489 ist bekannt, daß aminosilan-vernetzende Silikonmassen schnell aushärten, wenn man dem System eine Paste zusetzt, die Wasser und eine anorganische oder organische Verbindung, die mit Aminen unter Salzbildung reagiert enthält. Als derartige Verbindungen kommen anorganische und organische Säuren in Betracht. Die Zugabe dieser beschleunigenden Substanzen erfolgt unmittelbar vor der Verarbeitung der Masse. Die Säure reagiert mit dem Spaltprodukt, dem Amin unter Salzbildung, wobei damit das Reaktionsgleichgewicht auf die Seite der Produkte getrieben wird. Das gebildete Salz verbleibt in der Polymermatrix und hat somit einen erheblichen Einfluß auf die stofflichen Endeigenschaften des ausgehärteten Polymers. Insbesondere davon betroffen ist die Temperaturbeständigkeit, die durch das in der Matrix verbleibende Salz des Amins begrenzt wird. Grundlage dafür ist die Möglichkeit der acidolytischen bzw. aminolytischen Spaltung des Polydimethylsiloxangerüstes bei erhöhten Temperaturen. So wird beispielsweise bereits nach einigen Tagen Dauerbelastung bei 250°C eine Versprödung einer unter Zusatz von Oxalsäuredihydrat beschleunigt ausgehärteten Silikonmasse beobachtet. Zudem tritt durch Reaktion der Oxalsäure mit Kreide bei hohen Temperaturen eine gasförmige Zersetzung ein.

Die der Erfindung zugrundeliegende Aufgabe bestand somit darin, einen Bausatz zur Herstellung von Dicht- und Klebstoffmassen auf Basis von aminosilanvernetzenden Polysiloxanmischungen zur Verfügung zu stellen, wobei diese innerhalb kurzer Zeit, d.h. innerhalb weniger Minuten bis hin zu mehreren Stunden und unabhängig von der umgebenden Luftfeuchtigkeit aushärten sollen, wobei neben den typischen Merkmalen der bisher bekannten Vulkanisate, wie zum Beispiel Eigenhaftung, mechanische Eigenschaften und Beständigkeiten dabei insbesondere die Temperaturbeständigkeit des beschleunigt ausgehärteten Silikons verbessert werden soll.

Es wurde nun gefunden, daß der Ersatz der als Beschleuniger-Komponente wirkenden anorganischen oder organischen Säuren des bekannten Bausatzes durch saure oder basische Neutralsalze bei einer mit Säuren vergleichbaren beschleunigenden Wirkung auf die Aushärtung überraschenderweise eine deutlich verbesserte Temperaturbeständigkeit der unter diesen Bedingungen polymerisierten Silikone liefert. Unter sauren oder basischen Neutralsalzen werden Verbindungen verstanden, bei denen rechnerisch alle ionsierbaren Wasserstoff-Atome der Säure durch andere Kationen und alle OH-Gruppen der Kationen-Base durch Säureanionen ersetzt sind und lediglich über die unterschiedlichen Dissoziationsgrade der zugrundeliegenden Säuren und Basen die wässrigen Lösungen der Salze sauer bzw. basisch reagieren, insbesondere bei 1 molaren Lösungen pH-Werte von unter 5 oder über 9, insbesondere unter 4 oder über 10 erhalten werden. Darüberhinaus wurde gefunden, daß neben Aminosilan- auch Oxim- und Alkoxyvernetzer als Bestandteile vorteilhaft eingesetzt werden können.

Die der Erfindung zugrundeliegende Aufgabe wird durch die Merkmale des Hauptanspruches gelöst und durch die der Unteransprüche gefördert. Solche Bausätze zur Herstellung der Mischungen sind dadurch gekennzeichnet, daß sie mindestens folgende Komponenten enthalten:
A) 100 Gew.-Teile eines zumindest bifunktionell terminierten Diorganopolysiloxans, wobei dieses aus einer linearen oder verzweigten Kette aus sich wiederholenden Einheiten der Formel 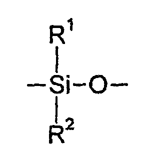 aufgebaut und - wie nachfolgend am Fall einer linearen Kette dargestellt - mit funktionellen Endgruppen Z terminiert ist. 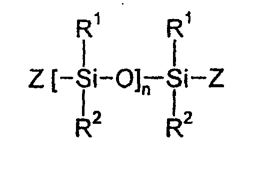 Hierbei bedeuten:
   - R¹, R²:: gesättigte oder ungesättigte Kohlenwasserstoffreste mit 1- 15 Kohlenstoffatomen, ggf. substituiert mit Halogen- oder Cyanogruppen
   - Z:: -H, -OH, -OR¹, ― OSiR³(NR⁴R⁵)₂, ―O-Si-(ON=CR⁴R⁵)₃ und ―O-Si-(OR³)₃
   - R³:: Wasserstoff oder einwertiger gesättigter oder ungesättigter Kohlenwasserstoff- oder Kohlenwasserstoffoxyrest mit 1 - 15 Kohlenstoffatomen.
   - R⁴, R⁵:: Wasserstoff und/oder gesättigter oder ungesättigter aliphatischer, cycloaliphatischer oder aromatischer Kohlenwasserstoffrest mit 1 bis 15 Kohlenstoffatomen, ggf. substituiert mit Halogen- oder Cyanogruppen
B) 0,1 bis 20 Gew.-Teile eines Aminosilan- oder Oxim- oder Alkoxyvernetzers der allgemeinen Formeln

   R³ _{y}-Si-(NR⁴R⁵)_{4-y} R³ _{y}-Si-(ON=CR⁴R⁵)_{4-y} R³ _{y}-Si-(OR³)_{4-y}

   wobei y= 0 oder 1 ist, und R³, R⁴ und R⁵ die obige Bedeutung haben.
C) 0,1 bis 20 Gew.-Teile eines Katalysators in Form eines sauren oder basischen Neutralsalzes.
D) 0 bis 20 Gew.-Teile Wasser.

Als Beispiel für die Reste R¹ und R² der Komponente A sind beliebige gesättigte Alkylreste wie Methyl, Ethyl, n-Propyl, Isopropyl, Octyl, Dodecyl, Octadecyl, aber auch cyclische wie Cyclopentyl und Cyclohexyl zu nennen. Darüberhinaus können ungesättigte aliphatische und cycloaliphatische Reste wie Vinyl, Allyl, Cyclopentenyl oder Cyclohexenyl und auch aromatische wie Phenyl oder Naphthyl und aliphatisch substituierte Reste wie beispielsweise Benzyl oder Toluyl verwendet werden. Die Reste R¹ und R² können innerhalb eines Polysiloxans von gleichem oder auch verschiedenem Aufbau sein. Auch ist es möglich, verzweigte und unverzweigte Polysiloxane mit dem vorstehend beschriebenen Aufbau und in unterschiedlicher Kettenlänge zu mischen. Vorzugsweise werden mit Hydroxylgruppen terminierte Polysiloxane, sogenannte α, ω-Dihydroxydiorganopolysiloxane mit Methyl- und Phenylresten eingesetzt.

Die genannten Reste können auch in halogen- und cyansubstituierter Form eingesetzt sein. Beispiele hierfür sind 1,1,1-Trifluortoluyl, β-Cyanethyl oder o-, m-oder p-Chlorphenylreste.

Die Viskosität der Diorganopolysiloxane liegt vorzugsweise im Bereich von 500 bis 350000 mPas.

Der Rest R³ kann neben Wasserstoff vom selben Aufbau sein, wie die Reste R¹ und R². Bevorzugt verwendet werden einfache Alkylreste wie Methyl oder Ethyl.

Die Reste R⁴ und R⁵ können den gleichen Aufbau haben wie die Reste R¹, R² oder R³, wobei einer oder beide Reste auch Wasserstoff sein können. Bevorzugt eingesetzt werden Organoaminosilane, welche beispielsweise aus Umsetzungen von Methyltrichlorsilanen mit primären, aliphatischen oder cycloaliphatischen Aminen, insbesondere mit sec-Butylamin oder Cyclohexylamin zu erhalten sind.

Als Komponente C eignen sich saure und basische Neutralsalze, wie beispielsweise die sauren Neutralsalze des Aluminiums insbesondere das Sulfat, das Chlorid und das Nitrat, die Aluminumalaune des Ammoniumions und der Alkalimetalle, bevorzugt des Natriums und Kaliums. Darüberhinaus sind als vorteilhafte Vertreter der sauren Neutralsalze die Salze des Eisens zu nennen, dabei insbesondere das Eisen-II-sulfat, das Eisen-III-phosphat, das Eisenalaun des Ammoniumions, sowie das Ammoniumeisen-II-sulfat ("Mohrsches Salz"). Beschleunigend wirkende basische Neutralsalze sind beispielsweise Trinatriumphosphat und Natriummetasilikat. Die sauren oder basischen Neutralsalze können ggf. auch in Kombination eingesetzt werden.

Komponente D kann der Mischung sowohl in flüssiger Form als auch gebunden als Kristallwasser zum Beispiel als Natriumsulfat-Dekahydrat oder eingeschlossen in Zeolithe und auch adsorbiert auf der Oberfläche von Füllstoffen wie beispielsweise Calciumcarbonat zugegeben werden. Vorzugsweise erfolgt die Zugabe von Komponente D in Kombination mit Komponente C gebunden als Kristallwasser.

Den Mischungen der Komponenten A bis D können weitere Stoffe zur Erzielung spezieller Eigenschaften zugegeben werden. Zu nennen sind hier insbesondere Farbpigmente und lösliche Farbstoffe, Stabilisatoren gegen Oxidation und Hitzeeinwirkung, Dispergatoren, Reaktionskatalysatoren, Fungizide, Haftvermittler, Lösungsmittel, Flammschutzmittel, Weichmacher (vorzugsweise Silikonöle aber auch auf Kohlenwasserstoffbasis), verstärkende Füllstoffe wie beispielsweise hochdisperse oder gefällte Kieselsäuren, Graphit, Ruß sowie passive Füllstoffe wie z.B. Calciumcarbonat, Silikate, Quarzmehl, Glas- und Carbonfasern, Diatomeenerde, Metallpulver; Metalloxide, Kunststoffpulver sowie Hohlkugeln aus Glas oder Kunststoffen. Als Kieselsäuren werden bevorzugt pyrogene Kieselsäuren verwendet, deren polare Oberfläche hydrophobisiert ist.

Mischungen aus den Komponenten A bis D sind nicht lagerstabil. Die zur Reaktionsbeschleunigung notwendigen Komponenten C und D werden deshalb der Mischung aus den Komponenten A und B unmittelbar vor Gebrauch in einer geeigneten Form, vorzugsweise angepastet in Silikon-Ölen oder -Polymeren der Komponente A zugemischt.

Die vorliegende Erfindung betrifft auch Verfahren zur Herstellung einer Dicht-, oder Klebstoffmischung bzw. Formmasse auf Basis von zumindest bifunktionell terminierten Diorganopolysiloxanen und Vernetzern, die dadurch gekennzeichnet sind, daß
A) 100 Gew.-Teile eines solchen Diorganopolysiloxans, wobei dieses aus einer linearen oder verzweigten Kette aus sich wiederholenden Einheiten der Formel 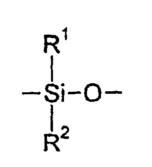 aufgebaut und entsprechend der nachfolgenden auf den Sonderfall linearer Ketten zutreffenden Formel 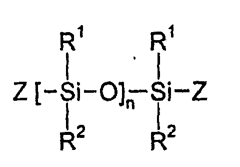 mit funktionellen Endgruppen Z terminiert ist,
   und wobei
   - R¹, R²:: gesättigte oder ungesättigte Kohlenwasserstoffreste mit 1 - 15 Kohlenstoffatomen, ggf. substituiert mit Halogen- oder Cyanogruppen
   - Z:: -H, -OH, -OR¹, ― OSiR³(NR⁴R⁵)₂, ―O-Si-(ON=CR⁴R⁵)₃ und ―O-Si-(OR³)₃
   - R³:: Wasserstoff oder einwertiger gesättigter oder ungesättigter Kohlenwasserstoff- oder Kohlenwasserstoffoxyrest
   - R⁴, R⁵:: Wasserstoff und/oder gesättigter oder ungesättigter aliphatischer, cycloaliphatischer oder aromatischer Kohlenwasserstoffrest mit 1 bis 15 Kohlenstoffatomen, ggf. substituiert mit Halogen- oder Cyanogruppen
B) 0,1 bis 20 Gew.-Teile eines Aminosilan- oder Oxim- oder Alkoxyvernetzers der allgemeinen Formeln

   R³ _{y}-Si-(NR⁴R⁵)_{4-y} R³ _{y}-Si-(ON=CR⁴R⁵)_{4-y} R³ _{y}-Si-(OR³)_{4-y}

   wobei y= 0 oder 1 ist, und R³, R⁴ und R⁵ die obige Bedeutung haben.
   sowie ggf. Farbpigmenten oder löslichen Farbstoffen, Stabilisatoren gegen Oxidation und Hitzeeinwirkung, Dispergatoren, Reaktionskatalysatoren, Fungiziden, Haftvermittlern, Lösungsmitteln, Flammschutzmitteln, Weichmachern (vorzugsweise Silikonöle aber auch Weichmacher auf Kohlenwasserstoffbasis), darüberhinaus aktiven, verstärkenden Füllstoffen wie beispielsweise hochdisperse oder gefällte Kieselsäuren, Graphit, Ruß sowie passiven Füllstoffen wie z.B. Calciumcarbonat, Silikate, Quarzmehl, Glas- und Carbonfasern, Diatomeenerde, Metallpulver, Metalloxide, Kunststoffpulver sowie Hohlkugeln aus Glas oder Kunststoffen miteinander vermischt werden und unmittelbar vor der Anwendung
C) 0,1 bis 20 Gew.-Teile eines Katalysators in Form eines sauren oder basischen Neutralsalzes.
D) 0 bis 20 Gew.-Teile Wasser
   ggf. angepastet in Silikon-Ölen oder -Polymeren zugegeben werden.

Die mit Hilfe des erfindungsgemäßen Bausatzes hergestellten Mischungen härten vorzugsweise bei Raumtemperatur in 20 Minuten bis 3 Stunden zu einer festen, klebfreien und schneidbaren Masse aus. Erhöhte Temperatur bei der Aushärtung (ca. 40°C) bewirkt einen zusätzlichen beschleunigenden Effekt. Die Silikonmischungen haften von sich aus auf Untergründen aus Glas, Keramik, Holz, Beton, Putz, Metallen und Kunststoffen. Eine schnellaufgebaute Eigenhaftung wird insbesondere auf Glas, Metallen und Kunststoffen mit polarer Oberläche erreicht. Die erfindungsgemäßen Mischungen werden deshalb vorteilhafterweise verwendet als Kleb- oder Dichtstoffe, als Schutzüberzüge zur elektrischen Isolierung, als Vergußmassen für elektrische und elektronische Bauteile, aber auch als Formmassen zur Herstellung von Abdrücken oder anderen Formteilen, welche sinnvoll aus Elastomeren gefertigt werden.

Nachfolgend wird die Erfindung anhand eines Beispiels näher erläutert.

### Beispiel

100 Gew.-Teile einer Komponente I bestehend aus:
100 Gew.-Teilen eines α,ω-Dihydroxydimethylpolysiloxans mit einer Viskosität von 20.000 mPa·s,
18 Gew.-Teilen einer hochdispersen Kieselsäure mit einer spezifischen Oberfläche nach BET von ca. 110 m²/g,
15 Gew.-Teilen eines Calciumcarbonat-Füllstoffes,
8 Gew.-Teilen Tris-(cyclohexylamino)methylsilan
werden bei Raumtemperatur mit 25 Gew.-Teilen einer Komponente II, bestehend aus:
100 Gew.-Teilen eines α,ω-Dihydroxydimethylpolysiloxans mit einer Viskosität von 20000 mPa·s,
9 Gew.-Teilen einer hochdispersen Kieselsäure mit einer spezifischen Oberfläche nach BET von ca. 150 m²/g,
2,5 - 3 Gew.-Teilen eines Ammoniumaluminiumalaundodecahydrats mit einer Kornfeinheit von < 100 µm
homogen miteinander vermischt.

Die aus den Komponenten eines erfindungsgemäßen Bausatzes hergestellte Silikonmischung war nach ca. 25 min bei Raumtemperatur unter Ausschluß von Luftfeuchtigkeit ausgehärtet bzw. schneidbar und erreichte nach einer Stunde eine Shore-Härte von ca. 20 - 25. Die Endhärte, gemessen nach 7 Tagen, beträgt Shore-A von ca. 40. Beide Komponenten für sich bleiben unter diesen Bedingungen lagerstabile Pasten. Die Masse wies eine erstaunliche Temperaturbeständigkeit unter Temperaturbedingungen bis 250°C auf. Der Gewichtsverlust bei einer Temperaturbelastung von 250°C beträgt nach einem Tag ca. 5%, bedingt durch austretendes Spaltprodukt, nach 7 Tagen 8% und liegt nach 42 Tagen bei ca. 12%.

Darüberhinaus wurde eine schnellaufgebaute Eigenhaftung auf verschiedenen Untergründen, insbesondere Glas, Metallen und Kunststoffen mit polarer Oberfläche erzielt. Die Anfangshaftung auf diesen Untergründen ist dabei bereits nach 30 min derart stark, daß ein Abziehen der Masse von der Klebefläche nur noch unter mechanischer Zerstörung möglich ist. Verklebte Teile können bereits nach 30 Minuten mechanisch belastet werden.

In der folgenden Tabelle sind weitere Versuche mit anderen sauren oder basischen Neutralsalzen wiedergegeben, wobei die Komponenten I und II sowie die Herstellung gemäß dem vorstehenden Beispiel durchgeführt wurden. Die über die Beschleunigersubstanz C eingebrachte Wassermenge beträgt dabei ca. 0,3 g/100 g I-Komponente, was ausreicht, um den zugesetzten Vernetzer (B-Komponente) ganz oder überwiegend zu hydrolysieren. Eine gesonderte Zugabe von Wasser (Komponente D) ist nicht erforderlich.

| Beschleuniger | Kristallwasser | pH-Wert | Mischungsverhältnis I:II (Gew.-T.) | Ausgehärtet/ Schneidbar |
|---|---|---|---|---|
| saure Neutralsalze: | | | | |
| Al₂(SO₄)₃ | 18 | 3-4 | 100:25 | > 3 h |
| NH₄Fe(SO₄)₂ | 12 | 1 | 100:25 | ∼60 min |
| FePO₄ | 4 | | 100:25 | ∼75 min |
| FeSO₄ | 7 | 3-4 | 100:25 | ∼70 min |
| NH₄Al(SO₄)₂ | 12 | 3-4,5 | 100:25 | ∼25 min |
| AlCl₃ | 6 | 2,5-3,5 | 100:25 | ∼3 h |
| KAl(SO₄)₂ | 12 | 3-3,5 | 100:25 | ∼60 min |

| basische Neutralsalze: | | | | |
|---|---|---|---|---|
| Na₄P₂O₇ | 10 | 8,8-9,4 | 100:25 | ∼40 min |
| Na₃PO₄ | 10 | 12 | 100:25 | ∼50 min |
| Na₂SiO₃ | 5 | 12,5 | 100:25 | > 3 h |
| Wasserzusatz (Vergleich): | | | | |
| H₂O (flüssig) | | | | ∼2 d |
| SiO₂ * x H₂O | | | | >> 8 h |

Durch den Einsatz der sauren oder basischen Neutralsalze lassen sich ebenso Systeme auf Oxim- oder Alkoxyvernetzer-Basis beschleunigen.

## Patentansprüche

1. Bausatz zur Herstellung von schnellhärtenden, aminosilanvernetzenden Silikonmassen aus zumindest bifunktionell terminierten Diorganopolysiloxanen, Aminosilanvernetzer sowie ggf. Füllstoffen, geeigneten Additiven und Pigmenten, welcher folgende Komponenten enthält:
A) 100 Gew.-Teile eines zumindest bifunktionell terminierten Diorganopolysiloxans, wobei dieses Polysiloxan aus einer linearen oder verzweigten Kette aus sich wiederholenden Einheiten der Formel 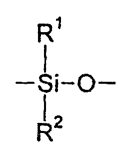 aufgebaut ist und mindestens zwei Endgruppen Z enthält,
mit
Z: -H, -OH, -OR¹, ― OSiR³(NR⁴R⁵)₂, ―O-Si-(ON=CR⁴R⁵)₃ und ―O-Si-(OR³)₃
R¹, R²: gesättigte oder ungesättigte Kohlenwasserstoffreste mit 1 bis 15 Kohlenstoffatomen, ggf. substituiert mit Halogen-oder Cyanogruppen,
B) 0,1 bis 20 Gew.-Teile eines Vernetzers,
C) 0,1 bis 20 Gew.-Teile eines Beschleunigers,
D) 0 bis 20 Gew.-Teile Wasser,
**dadurch gekennzeichnet, daß** der Beschleuniger in Komponente C ein saures oder basisches Neutralsalz ist und die Komponente B ein Aminosilan-Vernetzer der allgemeinen Formel:
R³ _{y}-Si-(NR⁴R⁵)_{4-y}
wobei y= 0 oder 1 ist,
mit
R³: Wasserstoff oder einwertiger gesättigter oder ungesättigter Kohlenwasserstoff- oder Kohlenwasserstoffoxyrest und
R⁴, R⁵: Wasserstoff und/oder gesättigter oder ungesättigter aliphatischer, cycloaliphatischer oder aromatischer Kohlenwasserstoffrest mit 1 bis 15 Kohlenstoffatomen ggf. substituiert mit Halogen- oder Cyanogruppen enthalten sind;
oder ein Oxim- oder Alkoxyvernetzer der allgemeinen Formel:
R³ _{y}-Si-(ONCR⁴R⁵)_{4-y}
oder
R³ _{y}-Si-(OR³)_{4-y}
wobei y= 0 oder 1 ist, und R³, R⁴ und R⁵ die obige Bedeutung haben; ist.

2. Bausatz nach Anspruch 1, **dadurch gekennzeichnet, daß** die Beschleuniger-Komponente C in kristallwasserhaltiger Form enthalten ist.

3. Bausatz nach Anspruch 1 bis 2, **dadurch gekennzeichnet, daß** als Komponente D Kristallwasser hydratisierter Stoffe oder an Zeolithen oder Kieselgelen oder Füllstoffoberflächen adsorbiertes Wasser verwendet wird.

4. Bausatz nach Anspruch 1 bis 3, **dadurch gekennzeichnet, daß** zusätzlich Farbpigmente oder lösliche Farbstoffe, Stabilisatoren gegen Oxidation und Hitzeeinwirkung, Dispergatoren, Reaktionskatalysatoren, Fungizide, Haftvermittler, Lösungsmittel, Flammschutzmittel, Weichmacher (vorzugsweise Silikonöle aber auch Weichmacher auf Kohlenwasserstoffbasis), darüberhinaus aktive, verstärkende Füllstoffe wie beispielsweise hochdisperse oder gefällte Kieselsäuren, Graphit, Ruß, sowie passive Füllstoffe wie z.B. Calciumcarbonat, Silikate, Quarzmehl, Glas- und Carbonfasern, Diatomeenerde, Metallpulver, Metalloxide, Kunststoffpulver sowie Hohlkugeln aus Glas oder Kunststoffen in den Komponenten A-D enthalten sind.

5. Bausatz gemäß Anspruch 1 bis 4, **dadurch gekennzeichnet, daß** als Diorganopolysiloxankomponente A ein α,ω-Dihydroxydiorganopolysiloxan eingesetzt wird.

6. Verfahren zur Herstellung einer Dicht- oder Klebstoffmischung auf Basis von Diorganopolysiloxanen und Aminosilan- oder Oxim- oder Alkoxyvernetzern, **dadurch gekennzeichnet, daß** Komponenten A und B gemäß Anspruch 1 zu einer ersten Vormischung und die Komponenten C und D zu einer zweiten Vormischung vermischt werden, und die beiden Vormischungen kurz vor der Anwendung zu der wirksamen Dicht- und Klebstoffmischung vereinigt werden.

7. Verfahren nach Anspruch 6, **dadurch gekennzeichnet, daß** als Komponente C eine Verbindung gemäß Anspruch 2 und als Komponente D eine Mischung gemäß Anspruch 2 oder 3 verwendet wird.

8. Verfahren nach Anspruch 6 bis 7, **dadurch gekennzeichnet, daß** die Komponenten C und/oder D ggf. in Kombination mit Stoffen aus Anspruch 4 angepastet und ggf. ein Weichmacher auf Silikonbasis oder ein Diorganopolysiloxan-Polymeres gemäß Anspruch 1 zugesetzt wird.

9. Verfahren nach Anspruch 6 bis 8, **dadurch gekennzeichnet, daß** man ein α,ω-Dihydroxydiorganopolysiloxan verwendet.

10. Verwendung von Mischungen der Bausätze nach Anspruch 1 bis 5 als Dicht-oder Klebstoff.

11. Verwendung von Mischungen der Bausätze nach Anspruch 1 bis 5 als Formmasse.

## Claims

1. Constructional kit for the production of rapidly hardening, aminosilane cross-linking silicone masses of at least bifunctionally terminated diorganopolysiloxanes, aminosilane cross-linkers, as well as possibly filling materials, suitable additives and pigments, which contains the following components:
A) 10C wt. parts of an at least bifunctionally terminated diorganopolysiloxane, whereby this polysiloxane is built up from a linear or branched chain of repeating units of the formula 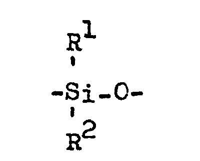 and contains at least two end groups Z with
Z: -H, -OH, -OR¹, -OSiR³(NR⁴R⁵)₂, -O-Si-(ON=CR⁴R⁵)₃ and -O-Si-(OR³)₃
R¹,R²: saturated or unsaturated hydrocarbon radicals with 1 to 15 carbon atoms possibly substituted with halogen or cyano groups,
B) 0.1 to 20 wt. parts of a cross-linker,
C) 0.1 to 20 wt. parts of an accelerator,
d) 0 to 20 wt. parts water,
**characterised in that** the accelerator in component C is an acidic or basic neutral salt and the component B an aminosilane cross-linker of the general formula:
R³ _{y}-Si-(NR⁴R⁵)_{4-y}
whereby y = 0 or 1,
with
R³: hydrogen or monovalent saturated or unsaturated hydrocarbon or hydrocarbonoxy radical and
R⁴,R⁵: hydrogen and/or saturated or unsaturated aliphatic, cycloaliphatic or aromatic hydrocarbon radical with 1 to 15 carbon atoms, possibly substituted with halogen or cyano groups;
or an oxime or alkoxy cross-linker of the general formula:
R³ _{y}-Si-(ONCR⁴R⁵)_{4-y}
or
R³ _{y}-Si-(OR³)_{4-y}
whereby y = O or 1 and R³, R⁴ and R⁵ have the above meaning.

2. Constructional kit according to claim 1,
**characterised in that** the accelerator component C is contained in water of crystallisation-containing form.

3. Constructional kit according to claim 1 to 2,
**characterised in that**, as component D, water of crystallisation-hydrate materials or water absorbed on zeolites or silica gels or adsorbed in filling material surfaces is used.

4. Constructional kit according to claim 1 to 3,
**characterised in that** there are additionally contained coloured pigments or soluble colouring materials, stabilisers against oxidation and action of heat, dispersers, reaction catalysts, fungicides, adhesives, solvents, flame-protection agents, plasticisers (preferably silicone oils but also plasticiers based on hydrocarbons), furthermore active, strengthening filling materials, such as for example highly dispersed or precipitated silicic acids, graphite, carbon black, as well as passive filling materials, such as e.g. calcium carbonate, silicates, quartz meal, glass and carbon fibres, diatomaceous earth, metal powder, metal oxides, synthetic material powder, as well as hollow spheres of glass or synthetic materials in the components A - D.

5. Constructional kit according to claim 1 to 4,
**characterised in that**, as diorganopolysiloxane component A., there is used an α,ω-dihydroxydiorganopolysiloxane.

6. Process for the production of a sealing or adhesive mixture based on diorganopolysiloxanes and aminosilane or oxime or alkoxy cross-linkers, **characterised in that** components A and B according to claim 1 are mixed to give a first pre-mixture and the components C and D to give a second pre-mixture and, shortly before use, the two pre-mixtures are combined to give the effective sealing and adhesive mixture.

7. Process according to claim 6, **characterised in that**, as component C, there is used a compound according to claim 2 and, as component D, a mixture according to claim 2 or 3.

8. Process according to claim 6 to 7, **characterised in that** the components C and/or D, possibly in combination with materials from claim 4, are pasted and a plasticiser based on silicone or a diorganopolysiloxane polymer according to claim 1 is possibly added.

9. Process according to claim 6 to 8, **characterised in that** one uses an α,ω-dihydroxydiorganopolysiloxane.

10. Use of mixtures of the constructional kits according to claim 1 to 5 as sealing or adhesive material.

11. Use of mixtures of the constructional kits according to claim 1 to 5 as moulding mass.

## Revendications

1. Kit de préparation de masses de silicone à durcissement rapide, se réticulant à l'aide de groupes aminosilane, constituées de diorganopolysiloxanes, d'agents de réticulation à aminosilane ainsi qu'éventuellement de charges, d'additifs et de pigments appropriés, lequel kit contient les composants suivants :
A) 100 parties en poids d'un diorganopolysiloxane à terminaison au moins bifonctionnelle, ce polysiloxane étant construit à partir d'une chaîne linéaire ou ramifiée constituée de motifs récurrents de formule 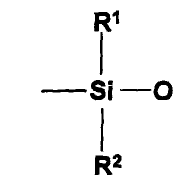 et contenant au moins deux groupes terminaux Z,
avec
Z : -H, -OH, -OR¹ et ― OSiR³NR⁴R⁵)₂, -O-Si-(ON=CR⁴R⁵)₃ et -O-Si-(OR³)₃
R¹, R²: des résidus d'hydrocarbure saturés ou insaturés ayant de 1 à 15 atomes de carbone, éventuellement substitués par des groupes halogéno ou cyano
B) 0,1 à 20 parties en poids d'un agent de réticulation,
C) 0,1 à 20% en poids d'un accélérateur,
D) 0 à 20 parties en poids d'eau,
**caractérisé en ce que** l'accélérateur dans le composant C est un sel neutre acide ou basique et le composant B est un agent de réticulation à base d'aminosilane de formule générale :
R³ _{y}Si-(NR⁴R⁵)_{4-y}
dans laquelle y= 0 ou 1, avec
R³: un atome d'hydrogène ou un résidu d'hydrocarbure ou d'hydrocarbure oxydé, monovalent, saturé ou insaturé,
R⁴, R⁵: un atome d'hydrogène et/ou un résidu d'hydrocarbure aliphatique, cycloaliphatique ou aromatique, saturé ou insaturé avec 1 à 15 atomes de carbone, éventuellement substitué par des groupes halogéno ou cyano
ou un agent de réticulation à groupe oxime ou alcoxy de formules générales :
R³ _{y}Si-(ONCR⁴R⁵)_{4-y}
ou
R³ _{y}Si-(OR³)_{4-y}
dans lesquelles y= 0 ou 1, et R³, R⁴ et R⁵ prennent la signification ci-dessus.

2. Kit selon la revendication 1, **caractérisé en ce que** le composant accélérateur C est contenu dans une forme contenant de l'eau de cristallisation.

3. Kit selon la revendication 1 ou 2, **caractérisé en ce que** de l'eau de cristallisation de substances hydratées ou bien de l'eau adsorbée sur des zéolites ou des gels de silice ou des surfaces de charge est employée en tant que composant D.

4. Kit selon les revendications 1 à 3, **caractérisé en ce que**, de plus, des pigments colorants ou des colorants solubles, des stabilisants contre l'oxydation et l'effet de la chaleur, des dispersants, des catalyseurs de réaction, des fongicides, des agents adhésifs, des solvants, des ignifugeants, des plastifiants (de préférence des huiles siliconées, mais également des plastifiants à base d'hydrocarbures), des charges de renforcement, de surcroît actives, comme par exemple des acides siliciques très dispersés ou précipités, du graphite, de la suie, ainsi que des charges passives comme par exemple, le carbonate de calcium, les silicates, la farine de quartz, les fibres de verre et de carbone, la terre à diatomées, les poudres métalliques, les oxydes métalliques, les poudres de matière plastique ainsi que les billes creuses de verre ou de matières plastiques, sont contenues dans les composants A à D.

5. Kit selon les revendications 1 à 4, **caractérisé en ce qu'**un α,ω-dihydroxydiorganopolysiloxane est mis en oeuvre en tant que composant A à diorganopolysiloxane.

6. Procédé de préparation d'un mélange de produit d'étanchéité ou de colle à base de diorganopolysiloxanes et d'agents de réticulation à groupe aminosilane ou oxime ou alcoxy, **caractérisé en ce que** les composants A et B selon la revendication 1, sont mélangés à un premier prémélange et les composants C et D sont mélangés à un deuxième prémélange, et que les deux prémélanges sont réunis peu avant l'application en obtenant le mélange efficace de produit d'étanchéité et de colle.

7. Procédé selon la revendication 6, **caractérisé en ce qu'**un composé selon la revendication 2 est employé en tant que composant C et un mélange selon la revendication 2 ou 3 est employé en tant que composant D.

8. Procédé selon les revendications 6 à 7, **caractérisé en ce que** les composants C et/ou D sont éventuellement mis en pâte, associés à des substances selon la revendication 4, et un plastifiant à base de silicone ou d'un polymère diorganopolysiloxane selon la revendication 1 y est éventuellement ajouté.

9. Procédé selon les revendications 6 à 8, **caractérisé en ce que** l'on emploie un α, ω-dihydroxydiorganopolysiloxane.

10. Utilisation de mélanges des kits selon les revendications 1 à 5 sous la forme de matière d'étanchéité ou de colle.

11. Utilisation de mélanges des kits selon les revendications 1 à 5 sous forme de masse moulable.
